# EUROPEAN PATENT SPECIFICATION

(11) **EP 1 001 897 B1**
(45) Date of publication and mention of the grant of the patent: **06.11.2002**
(21) Application number: 97939358.4
(22) Date of filing: 04.08.1997
(51) Int. Cl.: B61B 3/00, B61B 13/08, B61C 11/06, E01B 25/22, H02K 41/02

(54) **COMPUTERIZED CABLE-GUIDED-AIRCRAFT TRANSPORTATION SYSTEM**
COMPUTERGESTÜTZTES TRANSPORTSYSTEM MIT KABELGEFÜHRTEN LUFTFAHRZEUGEN
SYSTEME DE TRANSPORT AERONAUTIQUE INFORMATISE ET GUIDE PAR CABLE

(43) Date of publication of application: 24.05.2000
(73) Proprietor: Halus, William J., Anaheim Hills, CA 92807 (US)
(72) Inventor: Halus, William J., Anaheim Hills, CA 92807 (US)
(74) Representative: L'Helgoualch, Jean
(86) International application number: US9713683
(87) International publication number: WO99006258

(56) References cited:
- FR-A- 1 409 728
- JP-A- 5 176 413
- US-A- 3 938 445
- US-A- 4 036 147
- US-A- 4 425 851
- US-A- 5 473 233
- US-A- 5 535 963

## Description

### Background of the Invention

### Technical Field

The present invention relates to aircraft transportation systems and in particular to a computer controlled aircraft transportation system with precision flying aircraft connected to electric cables powered by electromagnetic linear motors and maintained in flight and on course by onboard computers and a central system wide computer. Integrated with the system are an electrical cable distribution system interactive with the aircraft for power and a fiber optic cable distribution system interactive with the aircraft for communication.

### Description of the Prior Art

Integrating the latest technologies into more areas of everyday life improves the quality of life and the ease and efficiency of accomplishing tasks that previously required considerably more time and effort. There is a need for combining the latest technologies in travel, communication, and power distribution into an integrated system providing greater efficiencies of use and eliminating the waste of redundancy between systems.

Transportation needs for speed, efficiency, safety, and pollution control are constantly growing as more and more people travel for business and pleasure. Transportation systems involving control of the vehicles by individuals in the vehicles often result in accidents resulting in deaths and injuries, traffic congestion, and can result in getting lost. Prior art transportation systems consume power and, in some cases create environmental pollution. Prior art power and communication cable distribution systems and transportation systems are separate systems often using parallel but separate power systems.

Most prior art transportation systems rely on human judgment and human reflexes to make decisions related to control of the vehicle operation and direction. Errors in judgment and slow reaction times cause much loss of time in traveling in the wrong direction as well as causing many accidents resulting in loss of lives and property.

Prior art power grids are separate from communication grids and transportation systems. Opportunities for shared power usage and shared infrastructure are usually not available. Duplication of labor, energy, and materials is costly and wasteful.

Most prior art vehicles utilize built-in drive mechanisms, such as gasoline powered motors and jet engines. The drive mechanisms add considerable weight to the vehicles and create substantial maintenance problems with many moving parts and interactive components. In addition, most prior art land vehicles provide heavy structural components, such as bumpers and heavy frames to protect occupants in the event of a collision. A substantial infrastructure is required to support heavy vehicles by roadways, tracks, and large monorails.

For exemple, document FR-A-1.409.728 discloses a transportation system comprising an elongated member, i.e. a cable, with means for conducting electricity, means for supporting the cable above ground level, drive elements which are moved along the cable as well as electrically activated means to cause said drive elements to be moved along the cable together with an aircraft having means for flying, i.e. means for creating lift.

Many prior art vehicles now incorporate at least some computerized controls and are equipped with communication systems such as cellular phones or two-way radios, but the computer and communication equipment is used strictly with the vehicle in traveling, leaving the equipment idle when the vehicle is not in use.

Vehicles having built-in power means consume energy and often create pollution as a by-product, as in the case of vehicles powered by gasoline and diesel engines. Billions of dollars per year are wasted by fossil fuel powered vehicles sitting in congested traffic. The self-powered vehicles are generally extremely heavy because of the power source, wheels and suspension systems, and structure provided in case of a collision, thereby requiring even more power to move the substantial weight. No provision is made for the vehicle to create energy.

### Disclosure of the Invention

The present invention provides an integrated transportation, power, and communication system with computerized control for safe and efficient operation. A single infrastructure of posts and cables supports all three previously separate technologies in a single unified system providing door-to-door transportation together with fiber optic cable and power cable distribution lines to buildings.

Aircraft are attached to a cable system for power and communication utilizing both an onboard computerized navigation control and a centralized system computer for overall system control to provide a safe transportation system elevated above pedestrians and ground obstacles and computer controlled with built-in programmed safeguards against accidental collisions. Fuzzy logic programs the aircraft to maintain a safe distance apart on the cable system with controlled acceleration and deceleration for a safe comfortable ride. Preprogramed destination and route selection saves time by selecting the optimum desired route and prevents getting lost.

Retractable delta wings, a vertical stabilizer tail and rear horizontal stabilizers trim tabs, a number of adjustable spoilers, as well as a streamlined body and adjustable angle of attack, all contribute to the precision flying capability of the aircraft of the present invention. A precision computerized onboard navigational computer, comparable to that of the B-2 bomber, provides instantaneous real-time control means for maintaining the aircraft in flight so that no weight support of the aircraft is required by the cable.

An electromagnetic linear motor formed by a hollow system cable with a series of annular electromagnets inside the cable interacting with a mating series of aircraft-connected annular electromagnets moving within the hollow cable provides a frictionless system with no contact between the cable and aircraft magnets and no moving parts in the system other than the aircraft and their electromagnets. Power for the system cable electromagnets is drawn from an electric cable power grid distribution cable coaxial with the system cable. Acceleration of the aircraft draws electrical energy from the power grid cable and deceleration of the aircraft adds electrical energy to the power grid cable providing energy efficiency with no pollution. High speeds (limited to the speed of sound for environmental reasons) are attainable in the frictionless system enabling much longer trips in a much shorter time than by conventional ground-based transportation, thereby providing the opportunity for spreading out the population over a larger area than the current high density population centers.

Because there are no large onboard motor, no wheels and no need for heavy collision-proof structures, the aircraft are fabricated of lightweight synthetic materials for greater efficiencies in construction and use and providing a lightweight high speed flying aircraft.

Sophisticated onboard navigational computer systems control the flight characteristics of the aircraft precisely to maintain the aircraft in flight so that the cable does not support the aircraft in high-speed flight. Because of the light weight and the fact that the aircraft are flying, a relatively lightweight cable is used for the high-speed portions of the system. At entering and exiting points along the system, heavier cable may be employed to support the aircraft with the cable sloping downwardly to lower the aircraft to ground level at final destination points. Small electric motors adjacent to the cable attached to the aircraft support may propel the aircraft along the cable by drive wheels during entering and exiting if it is desired to eliminate the electric power in the cable adjacent to the ground for safety. Cogs on the cable interact with mating holes in the drive wheels to move the aircraft. Onboard batteries charged by the system power the electric motor. As an alternative or adjunct to sloping system cables, adjustable support lines connecting the aircraft to the system cables may lower and raise the aircraft for ground-level access, by angling the cables or by retracting cables.

Onboard communication systems communicate with fiber optic cables coaxial with the system cable. Radio wave communication between the moving aircraft and the fiber optic cable enables the communication providing a constant communication system.

When the aircraft arrives at its final destination at a home, office or other building, a room there is equipped to receive the aircraft inside the building, so that the aircraft may be used as a computer and communication center in the home, office or other location. The electric cable and fiber optic cable also connect to the building as part of a power grid and communication grid.

Small aircraft designed for one or two people are efficient personal transporters which are suspended from a single cable. Current traffic problems such as traffic jams and car jacking would be eliminated with computer controlled high speed travel off of the ground non-stop from point of origin to point of destination thereby eliminating the wasting of fuel in traffic jams and cutting down on the need for imported oil. Elimination of accidents would lower death and injury rates and result in considerable savings in health care costs. Larger aircraft, including airline size aircraft, are supported on two or more cables and provide transportation for more passengers and cargo. The aircraft may be used in manufacturing and distribution operations to transport goods and people. The high speed of the aircraft and the computerized control enable a substantial number of people to be moved quickly in larger bus-like aircraft as well as many small aircraft. This capability is important in civil defense applications, such as the evacuation of large numbers of people from an area in times of natural and manmade disasters. Military applications of the system include a highly efficient rapid system of transporting troops, equipment, weapons and supplies. The system provides the additional national defense function of a highly efficient and highly controlled ground-based mobile missile transportation system with missiles constantly traveling on larger aircraft over covered cable networks.

Power for the electric cable power grid of the present system is preferably drawn from pollution-free sources. Current technology enables the creation of new power sources. Tunneling underground and through mountains enables water to be channeled from abundant water sources, especially in flood plain regions, to dry regions for irrigation and hydroelectric power by placing power generating turbines in the channel. Creating a trans-basin water diversion provides the elimination of annual devastating floods.

The present invention enables an integration of private and public aircraft so that people can use their own aircraft traveling on the cable network or signal, by a personal radio-controlled signaling device, for an aircraft to pick them up at their specific location, like an automated driverless taxi. The person then enters the aircraft and programs the onboard computer for desired destination and travels on the system for a fee billed through the central computer. After arriving at the desired destination, the person exits the aircraft, which goes back into the system to pick up another passenger.

This smart transportation system of the twenty-first century is known as the Aerial SmarTrans (TM). This is the high tech vehicle that will construct and travel the information super highway, thus invigorating and renewing American civilization. It will give the American people great pleasure and pride to pay and ride smart transportation for the next century.

### Brief Description of the Drawings

These and other details of my invention will be described in connection with the accompanying drawings, which are furnished only by way of illustration and not in limitation of the invention, and in which drawings:
FIG. 1 is a perspective view of the preferred embodiment of a flying aircraft attached to the combined cable system;
FIG. 2 is a cross-sectional view taken through 2-2 of FIG. 1 showing the intertor of the cable and the aircraft electromagnets;
FIG. 3 is a perspective view of a single electromagnet;
FIG. 4 is a front elevational view of the preferred embodiment of the invention in a stationary position with the doors open;
FIG. 5 is a partial perspective view of the aircraft electromagnets aligned for insertion in the cable;
FIG. 6 is an enlarged partial perspective view of the aircraft electromagnets and rods connectable to the aircraft;
FIG. 7 is a side elevational view of the aircraft in a stationary position on a sloping portion of the cable;
FIG. 8 is a side elevational view of the aircraft in motion suspended by a pair of support cables;
FIG. 9 is a side elevational view of the aircraft in a stationary position suspended by a pair of support cables;
FIG. 10 is a partial perspective view of the electric motor auxiliary drive of the aircraft aligned with a branch of the cable;
FIG. 11 is a perspective view of a wide-bodied aircraft connected to two structural cables with a smaller aircraft connected to a single structural cable docked in the wide-bodied aircraft;
FIG. 12 is a side elevational view of the aircraft parked in a room of a building for use as a communication and computer networking work station.

### Best Mode for Carrying Out the Invention

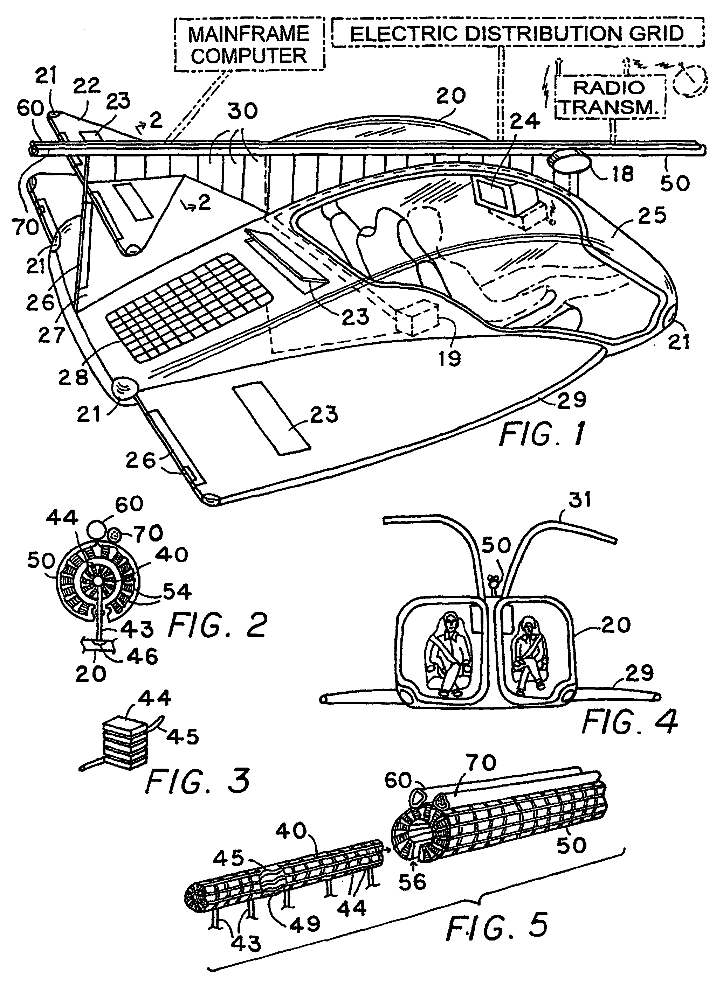

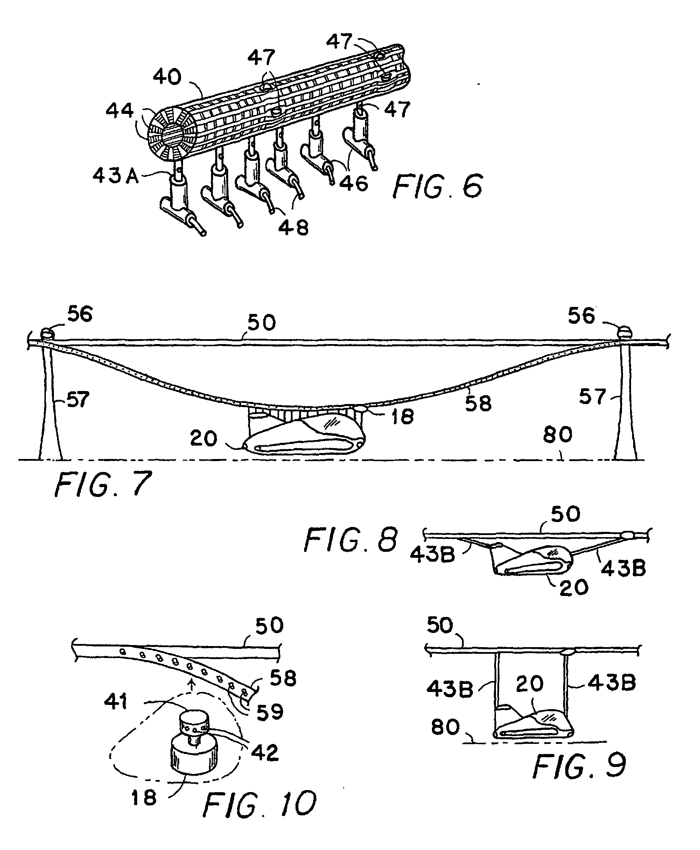

In FIG.1, a transportation system comprises an aircraft 20 connected to an elongated member, a structural cable 50, extending along a travel route. Spaced vertical supports 57, as seen in FIG. 7 support the cable 50 elevated above ground level 80. The vertical supports 57 may be provided with lights 56 to serve also as street lamps. The structural cable 50 has an means for conducting electricity, an electricity distribution cable 60 attached thereto.

The structural cable 50 is provided with a central opening and an interconnected bottom slot 56 along its length. At least one drive element 40, as seen in FIGS. 2, 5 and 6, travels along the structural cable in the central opening. An electrically activated means causes the drive element 40 to travel along the structural cable 50, the electrically activated means drawing electric power from the electricity distribution cable 60. Each drive element 40 comprises at least one linear array of first electromagnets 44 fitting within the central opening. As best seen in FIG. 5, the linear arrays of electromagnets 44 are separated by flexible connecting portions 49, through which pass electric wires 45 which are wound around magnetic cores 44 to form the electromagnets, as seen in FIG. 3. The means for moving the drive elements 40 comprises a series of second electromagnets 54 encircling the central opening along its length and computerized control means for creating a constantly changing phase shift along the second electromagnets 54 electrically connected therewith, so that creating a constantly changing phase shift along the second electromagnets 54 attracts the first electromagnets 44 drawing the first electromagnets 44 along the length of the structural cable. The first electromagnets 44 remain spaced apart from the second electromagnets 54 due to the magnetic field so that a frictionless linear electromagnetic motor is created by the interaction of the first and second electromagnets. A plurality of rolling elements 47, such as wheels and ball bearings, are spaced around each drive element 40 so that the rolling elements will contact the structural cable should the electromagnets fail to space the drive element 40 from the structural cable 50.

The aircraft 20 is connected to the at least one drive element 40 by a series of elongated supports 43 extending downwardly from the drive elements through the slot 56 (as shown in FIGS. 2 and 5). A one-way pivot 46 connects each elongated support 43 with the aircraft to allow forward pivoting of the elongated support as the aircraft 20 accelerates and backward pivoting as the aircraft decelerates. In FIG. 6, each elongated support 43A comprises a telescoping shock absorber. Wires 48 for conducting electricity extend through the elongated support to the aircraft. In FIGS. 8 and 9, the elongated support comprises support cables 43B which can be angled in various orientations, so that the aircraft 20 can be raised toward and lowered away from the horizontal structural cable 50. FIG. 8 shows the aircraft 20 in flight with the support cables 43B sharply angled maintaining the aircraft 20 in flight up near the structural cable 50. FIG. 9 shows the aircraft in a stationary position with the support cables 43B in a straight vertical orientation maintaining the aircraft 20 in a lowered position near the ground level 80. Another way to vary the height of the aircraft 20 is using variably extensible cables which roll onto rollers (not shown) inside the aircraft to change the exposed length of cable.

The aircraft 20 is equipped with complete means for flying including means for creating lift, at least one horizontal stabilizer 27, at least one vertical stabilizer 22, a plurality of trim tabs 26, and a plurality of spoilers 23 extending from the aircraft and the computerized controlling means (computer monitor 24 shown in FIG. 1) is programmed to operate as a fly-by-wire autopilot, controlling the drive element electromagnets 44 and the other flying means, maintaining the aircraft in a precise flight pattern out of contact with the structural cable 50. The aircraft 20 is held in flight by movement of the drive element 40 along the structural cable 50. By maintaining the aircraft in flight, the weight of the aircraft 20 is not supported by the structural cable 50 so that the structural cable can be a relatively thin cable along the flight route. The means for creating lift comprises retractable delta wings 29 reversibly extensible from two opposing sides of the aircraft, an airfoil contour of the aircraft so that the aircraft creates lift, and computerized means for changing the angle of attack of the aircraft to create additional lift. Overlapping panels 30 may be mounted over the elongated supports 43 to create an additional horizontal stabilizer.

In FIGS. 7 and 10, an auxiliary electric motor 18 connected to the side of one drive element, has a mechanical means in the form of a rotatable wheel 41 for moving the drive element 40 along the structural cable 50. Holes 42 regularly spaced around the perimeter of the wheel 41 interact with pegs 59 protruding from a branch 58 of the structural cable. A battery 19 in the aircraft 20 powers the electric motor, and a means for recharging the battery connects to the wires 48 in FIG. 6. Solar panels 28 on the aircraft provide additional means for charging the battery.

Access and egress branch cables 58 connect with the structural cable 50, the branch cables being stronger than the structural cable for supporting the aircraft hanging from the branch cables, the branch cables sloping to position the aircraft at ground level for loading and unloading the aircraft 20. The mechanical means for moving the at least one drive element engages the branch cables to move the aircraft along the branch cables slowing to a stop on the egress branch cables and accelerating from stop up to flying speed on the access branch cables.

In FIGS. 2 and 5, an electricity distribution cable 60 is attached to the structural cable 50 along its length. The electric distribution cable 60 connects into an electricity distribution grid as in FIG. 1 so that acceleration of the aircraft draws electric power from the electricity distribution grid and deceleration of the aircraft adds electric power to the electricity distribution grid, changing the linear motor to a linear generator.

A fiber optic cable 70 is attached to the structural cable 50 along its length and a telephonic and computer networking means for long distance digital audiovisual communicating having a radio wave transmitter and receiver are positioned within the aircraft, so that the means for long distance communicating interacts with the fiber optic cable by radio waves, the fiber optic cable 70 connected to a communication grid.

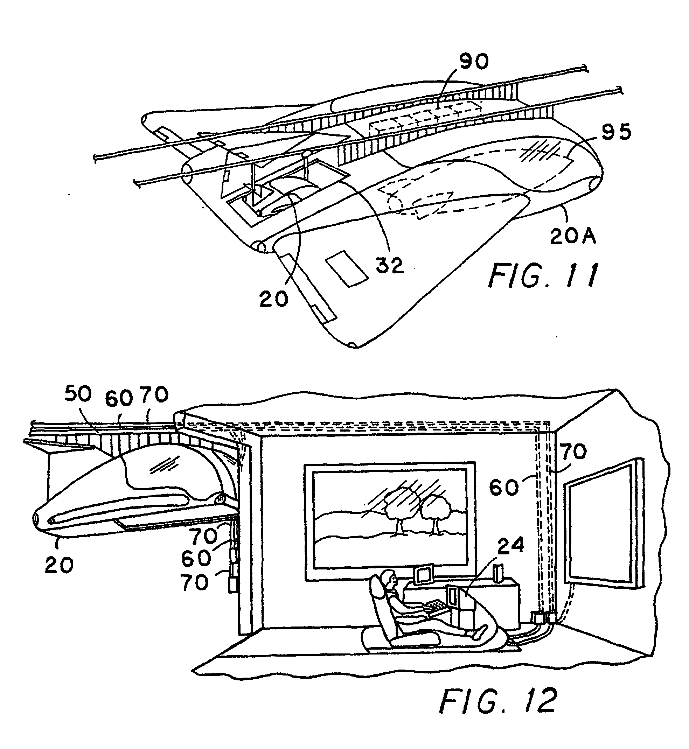

The fiber optic cable 70 and the electric distribution cable 60 both connect to buildings as part of a digital audiovisual communications and power distribution networks. In FIG. 12, the aircraft 20 is configured to fit within a room in a building, the computerized means for controlling the flying means is programmed to be usable within the room in the building for other uses, and the means for long distance communicating is configured to be usable within the room in the building. The aircraft 20 when parked within the room becomes a communication and computer network work station. For the purpose of aesthetics, the vehicle's outer body, including the delta wings, can be detached from the platform containing the seats, the computer, and the communication equipment, before the platform enters the building's communication center.

A central mainframe super computer electrically interconnects with the means for creating a constantly changing phase shift along the second electromagnets and electrically interconnects with the computerized means for controlling the flying means, so that movement of a number of aircraft along the structural cable 50 is controlled by the central computer and the computerized means for controlling the flying means can communicate routing information between the aircraft and the central computer. The aircraft is controllable by the central computer and is able to carry cargo only with no passengers on board. The system may be used as a ground-based mobile missile transportation system with a plurality of aircraft constantly moving on a plurality of structural cables carrying defense ground-to-air missiles 95 (as in FIG. 11).

In FIG. 11, two or more cables 50 spaced apart and parallel to one another so that a wide-bodied aircraft 20A is connected to both structural cables by drive elements 43 so that the wide-bodied aircraft is capable of carrying a heavy cargo of people and/or goods 90. The wide-bodied aircraft 20A has a means for docking 32 so that a small aircraft 20 traveling along a single structural cable 50 may dock with the wide-bodied aircraft 20A.

The aircraft is fabricated of lightweight synthetic structural material. A great deal of the cabin of the aircraft is covered with polarized panels 25 for light control inside the aircraft. The doors 31 wing upwardly out of the way (see FIG. 4) for easy access and egress. Lights 21 are positioned on the outside of the aircraft 20 for running lights and viewing the surroundings in the dark. The structural cables 50 and drive elements 40 are coated with weatherproofing material.

It is understood that the preceding description is given merely by way of illustration and not in limitation of the invention and that various modifications may be made thereto without departing from the spirit of the invention as claimed.

## Claims

1. A transportation system comprising:
an elongated member (50), having means (60) for conducting electricity, extending along a travel route;
means (57) for supporting the elongated member (50) above ground level;
at least one drive element (40) which travels along the elongated member;
an electrically activated means for causing the at least one drive element to travel along the elongated member, which electrically activated means draws electric power from the means (60) for conducting electricity;
an aircraft (20) connected to the at least one drive element (40), the aircraft having means for flying (22,23,26,27) the aircraft held in flight by movement of the at least one drive element along the elongated member (50);
a computerized means for controlling the flying means;
wherein the means for flying comprises means for creating lift, at least one horizontal stabilizer (27), at least one vertical stabilizer (22), a plurality of trim (26), and a plurality of spoilers (23) extending from the aircraft and the computerized controlling means (24) is programmed to operate as a fly-by-wire autopilot, controlling the drive element and the means for flying, maintaining the aircraft in a precise flight pattern out of contact with the elongated member;
wherein the elongated member comprises a structural cable having a central opening and an interconnected bottom slot (56) through the elongated member along its length, the at least one drive element comprises at least one linear array of first electromagnets (44) fitting within the central opening, and the means for moving the at least one drive element comprises a series of second electromagnets (54) encircling the central opening along its length and means for creating a constantly changing phase shift along the second electromagnets electrically connected therewith, so that creating a constantly changing phase shift along the second electromagnets attracts the first electromagnets drawing the first electromagnets along the length of the structural cable, the first electromagnets remaining spaced apart from the second electromagnets so that a linear electromagnetic motor/generator is created by the interaction of the first and second electromagnets.

2. The transportation system of claim 1 wherein the means for creating lift comprises retractable delta wings reversibly extensible from two opposing sides of the aircraft.

3. The transportation system of claim 2 wherein the means for creating lift further comprises an airfoil contour of the aircraft so that the aircraft creates lift.

4. The transportation system of claim 3 wherein the means for creating lift further comprises means for changing the angle of attack of the aircraft to create lift.

5. The transportation system of claim 1 wherein the at least one drive element further comprises an elongated support extending from each of the at least one linear arrays of first electromagnets through the slot interconnecting the at least one drive element with the aircraft and the elongated support further comprises at least one wire for conducting electricity from the drive element to the aircraft.

6. The transportation system of claim 5 wherein the elongated support comprises a support cable adjustable in length, so that the aircraft can be raised and lowered from the horizontal structural cable.

7. The transportation system of claim 1 wherein the means for conducting electricity comprises an electricity distribution cable attached to the structural cable along its length, the electric distribution cable connected into an electricity distribution grid so that acceleration of the aircraft draws electric power from the electricity distribution grid and deceleration of the aircraft adds electric power to the electricity distribution grid, creating highly efficient use of energy.

8. The transportation system of claim 7 further comprising a fiber optic cable attached to the structural cable along its length and means for long distance digital audiovisual communicating having a radio wave transmitter and receiver within the aircraft, so that the means for long distance communicating interacts with the fiber optic cable by radio waves, the fiber optic cable connected via satellites to a global digital audiovisual communication grid.

9. The transportation system of claim 8 wherein the fiber optic cable and the electric distribution cable both connect to a building, the aircraft is configured to fit within a room in the building, the computerized means for controlling the flying means is programmed to be usable within the room in the building for other uses, and the means for long distance digital audiovisual communicating is configured to be usable within the room in the building.

10. The transportation system of claim 1 further comprising a central mainframe super computer electrically interconnected with the means for creating a constantly changing phase shift along the second electromagnets and electrically interconnected with the computerized means for controlling the flying means, so that movement of a number of aircraft along the structural cable is controlled by the central mainframe super computer and the computerized means for controlling the flying means can communicate routing information between the aircraft and the central computer.

11. The transportation system of claim 10 wherein the aircraft is controlled by the central computer and carries only cargo.

12. The transportation system of claim 11 wherein a plurality of aircraft are constantly moving on a plurality of structural cables, the plurality of aircraft carrying missiles, thereby creating an instant response ground-based mobile missile transportation system.

13. The transportation system of claim 1 further comprising an auxiliary electric motor connected to the at least one drive element having mechanical means for moving the at least one drive element along the structural cable, a battery in the aircraft for powering the electric motor, and a means for recharging the battery.

14. The transportation system of claim 13 further comprising access and egress branch cables connected with the structural cable, the branch cables being stronger than the structural cable for supporting the aircraft hanging from the branch cables, the branch cables sloping to position the aircraft at ground level for loading and unloading the aircraft so that the mechanical means for moving the at least one drive element engages the branch cables to move the aircraft along the branch cables slowing to a stop on the egress branch cables and accelerating from stop to flying speed on the access branch cable.

15. The transportation system of claim 13 further comprising solar panels on the aircraft for charging the battery.

16. The transportation system of claim 1 further comprising at least one additional structural cable separated from and parallel to the structural cable so that a wide-bodied aircraft is connected to both structural cables by the at least one drive element to each structural cable so that the wide-bodied aircraft is capable of carrying heavy cargo, and the wide-bodied aircraft has a means for docking so that the aircraft traveling along a single structural cable may dock with the wide-bodied aircraft, while at full speed for loading and unloading individual passengers for selected destinations.

17. The transportation system of claim 1 wherein the means for supporting the structural cable comprises a series of vertical posts in the ground having means for supporting the structural cable along the top of the structural cable.

18. The transportation system of claim 1 wherein the at least one drive element further comprises a plurality of rolling means spaced around the at least one drive element so that the rolling means will contact the structural cable should the electromagnets fail to space the at least one drive element from the structural cable.

## Patentansprüche

1. Transportsystem, umfassend:
ein Langelement (50), das Mittel (60) zum Leiten von Elektrizität aufweist und sich entlang einer Reiseroute erstreckt;
Mittel (57) zum Tragen des Langelements (50) über Erde;
zumindest ein Antriebselement (40), das sich entlang des Langelements bewegt;
ein elektrisch aktiviertes Mittel, das hervorruft, dass das zumindest eine Antriebselement sich entlang des Langelements bewegt, dessen elektrisch aktiviertes Mittel elektrische Leistung vom Mittel (60) zur Leitung der Elektrizität zieht;
ein Flugzeug (20), das mit dem zumindest einen Antriebselement (40) verbunden ist, wobei das Flugzeug Mittel zum Fliegen (22, 23, 26, 27) aufweist, und das Flugzeug durch die Bewegung zumindest eines Antriebselements entlang des Langelements (50) im Flug gehalten wird;
ein computergesteuertes Mittel zur Steuerung des Flugmittels;
worin das Mittel zum Fliegen Mittel zur Erzeugung von Auftrieb, zumindest einen horizontalen Stabilisator (27), mindestens einen vertikalen Stabilisator (22), eine Vielzahl von Rudern (26) und eine Vielzahl von Spoilern (23) umfasst, die sich vom Flugzeug erstrecken, und das computergesteuerte Steuerungsmittel (24) programmiert ist, um als ein Fly-by-Wire (FBW)-Autopilot zu arbeiten, der das Antriebselement und das Mittel zum Fliegen steuert, sowie das Flugzeug in einem genauen Flugmuster aus dem Kontakt mit dem Langelement hält;
worin das Langelement ein Strukturkabel umfasst, das eine zentrale Öffnung und einen Verbindungsbodenschlitz (56) durch das Langelement entlang seiner Länge aufweist, wobei das zumindest eine Antriebselement zumindest eine lineare Anordnung erster Elektromagneten aufweist, die in die zentrale Öffnung passen, und das Mittel zum Bewegen des zumindest einen Antriebselements eine Reihe von zweiten Elektromagneten (54) umfasst, die die zentrale Öffnung entlang ihrer Länge umgeben, und Mittel zum Erzeugen einer konstant wechselnden Phasenverschiebung entlang der zweiten Elektromagneten, die damit elektrisch verbunden sind, so dass eine sich konstant ändernde Phasenverschiebung entlang der zweiten Elektromagneten die ersten Elektromagneten anzieht, so dass die ersten Elektromagneten entlang der Länge des Strukturkabels gezogen werden, wobei die ersten Elektromagneten von den zweiten Elektromagneten beabstandet bleiben, so dass ein linearer elektromagnetischer Motor / Generator durch die Wechselwirkung der ersten und zweiten Elektromagneten erzeugt wird.

2. Transportsystem nach Anspruch 1, worin das Mittel zum Erzeugen von Auftrieb einfahrbare Deltaflügel umfasst, die reversibel von zwei sich gegenüberliegenden Seiten des Flugzeugs ausfahrbar sind.

3. Transportsystem nach Anspruch 2, worin das Mittel zum Erzeugen von Auftrieb ferner eine Tragflächenkontur des Flugzeugs umfasst, so dass das Flugzeug Auftrieb erzeugt.

4. Transportsystem nach Anspruch 3, worin das Mittel zum Erzeugen von Auftrieb weiters Mittel zum Ändern des Anstellwinkels des Flugzeugs, damit Auftrieb erzeugt wird, umfasst.

5. Transportsystem nach Anspruch 1, worin das zumindest eine Antriebselement weiters einen länglichen Träger aufweist, der sich von jeder der zumindest einen linearen Anordnung erster Elektromagneten durch den Schlitz, der das zumindest eine Antriebselement mit dem Flugzeug verbindet, erstreckt, und der längliche Träger weiters zumindest einen Draht zur Leitung von Elektrizität vom Antriebselement zum Flugzeug umfasst.

6. Transportsystem nach Anspruch 5, worin der längliche Träger ein Trägerkabel umfasst, das in seiner Länge einstellbar ist, so dass das Flugzeug vom horizontalen Strukturkabel angehoben und abgesenkt werden kann.

7. Transportsystem nach Anspruch 1, worin das Mittel zum Leiten von Elektrizität ein Elektrizitätsverteilerkabel umfasst, das mit dem Strukturkabel entlang seiner Länge verbunden ist, wobei das Elektrizitätsverteilerkabel an ein Elektrizitätsverteilungsnetz angeschlossen ist, so dass Beschleunigen des Flugzeugs elektrische Leistung vom Elektrizitätsverteilungsnetz zieht und Verlangsamen des Flugzeugs dem Elektrizitätsverteilungsnetz elektrische Leistung zuführt, wodurch Energie in einer höchst effizienten Weise verwendet wird.

8. Transportsystem nach Anspruch 7, das weiters ein Glasfaserkabel umfasst, das mit dem Strukturkabel entlang seiner Länge verbunden ist, und Mittel zur digitalaudivisuellen Kommunikation über große Distanzen, das einen Funkwellensender und -empfänger im Flugzeug aufweist, so dass das Mittel zur Kommunikation über große Distanzen mit dem Glasfaserkabel über Funkwellen interagiert, wobei das Glasfaserkabel über Satelliten mit einem globalen digital-audiovisuellen Kommunikationsnetz verbunden ist.

9. Transportsystem nach Anspruch 8, worin das Glasfaserkabel und das Elektrizitätsverteilerkabel beide mit einem Gebäude verbunden sind, das Flugzeug so konfiguriert ist, dass es in einen Raum im Gebäude passt, das computergesteuerte Mittel zur Steuerung des Flugmittels so programmiert ist, dass es im Raum im Gebäude für andere Zwecke verwendet werden kann, und das Mittel für digital-audivisuelle Kommunikation über große Distanzen so konfiguriert ist, dass es im Raum im Gebäude verwendet werden kann.

10. Transportsystem nach Anspruch 1, das weiters einen zentralen Supergroßrechner umfasst, der elektrisch mit dem Mittel zum Erzeugen einer sich konstant ändernden Phasenverschiebung entlang der zweiten Elektromagneten und elektrisch mit dem computergesteuerten Mittel zum Steuern des Flugmittels verbunden ist, so dass die Bewegung einer Anzahl von Flugzeugen entlang des Strukturkabels durch den zentralen Supergroßrechner gesteuert wird, und das computergesteuerte Mittel zum Steuern des Flugmittels Leitweginformation zwischen dem Flugzeug und dem zentralen Computer kommunizieren kann.

11. Transportsystem nach Anspruch 10, worin das Flugzeug durch einen zentralen Computer gesteuert wird und nur Fracht trägt.

12. Transportsystem nach Anspruch 11, worin eine Vielzahl von Flugzeugen sich konstant auf einer Vielzahl von Strukturkabeln bewegt, wobei die Vielzahl von Flugzeugen Raketen trägt, wodurch ein mobiles Boden-basiertes Raketentransportsystem für den sofortigen Rückschlag erzeugt wird.

13. Transportsystem nach Anspruch 1, das weiters einen elektrischen Hilfsmotor umfasst, der an das zumindest eine Antriebselement angeschlossen ist, das ein mechanisches Mittel zur Bewegung des zumindest einen Antriebselements entlang des Strukturkabels umfasst, eine Batterie im Flugzeug zur Versorgung des Elektromotors mit elektrischer Leistung und ein Mittel zum Wiederaufladen der Batterie.

14. Transportsystem nach Anspruch 13, das weiters mit dem Strukturkabel verbundene Zugangs- und Ausgangszweigkabel umfasst, wobei die Zweigkabel stärker sind als das Strukturkabel, um das von den Zweigkabeln hängende Flugzeug zu tragen, wobei die Zweigkabel sich in eine Position abneigen, um das Flugzeug am Boden zu positionieren, damit das Flugzeug ent- und beladen werden kann, so dass das mechanische Mittel zum Bewegen des zumindest einen Antriebselements in die Zweigkabel eingreift, um das Flugzeug entlang der Zweigkabel zu bewegen, wobei es auf den Ausgangszweigkabeln bis zum Stopp verlangsamt und auf den Zugangszweigkabeln vom Stopp bis zur Fluggeschwindigkeit beschleunigt.

15. Transportsystem nach Anspruch 13, das weiters Solarpaneele auf dem Flugzeug zum Wiederaufladen der Batterie umfasst.

16. Transportsystem nach Anspruch 1, das weiters zumindest ein zusätzliches Strukturkabel umfasst, das vom Strukturkabel getrennt ist und zu diesem parallel verläuft, so dass ein Großraumflugzeug mit beiden Strukturkabeln durch das zumindest eine Antriebselement mit jedem der Strukturkabel verbunden ist, so dass das Großraumflugzeug schwere Frachten tragen kann, und das Großraumflugzeug ein Mittel zum Andocken aufweist, so dass das Flugzeug, das sich entlang eines einzelnen Strukturkabels bewegt, an das Großraumflugzeug andocken kann, so dass bei voller Geschwindigkeit einzelne Passagiere für ausgewählte Destinationen zu- und aussteigen können.

17. Transportsystem nach Anspruch 1, worin das Mittel zum Tragen des Strukturkabels eine Reihe von vertikalen Pfosten im Boden umfasst, die Mittel zum Tragen des Strukturkabels entlang der Oberseite des Strukturkabels aufweisen.

18. Transportsystem nach Anspruch 1, worin das zumindest eine Antriebselement weiters eine Vielzahl von Rollmitteln umfasst, die um das zumindest eine Antriebselement herum beabstandet sind, so dass die Rollmittel das Strukturkabel berühren, sollten die Elektromagnete dabei versagen, das zumindest eine Antriebselement vom Strukturkabel zu beabstanden.

## Revendications

1. Système de transport comprenant :
un élément allongé (50) ayant des moyens (60) pour conduire l'électricité, s'étendant le long d'une voie de circulation ;
des moyens (37) pour supporter l'élément allongé au-dessus du sol ;
au moins un guide (40) qui circule le long de l'élément allongé ;
des moyens activés électriquement pour que ledit guide circule le long de l'élément allongé, lesdits moyens électriquement activés recevant la puissance électrique des moyens (60) de conduction de l'électricité ;
un aéronef (20) connecté à au moins un guide (40), ledit aéronef ayant des moyens pour voler (22, 23, 26, 27), l'aéronef étant maintenu en vol par le mouvement d'au moins un guide le long de l'élément allongé (50) ;
des moyens de calcul par ordinateur pour contrôler les moyens de navigation ;
dans lequel les moyens de navigation comprennent des moyens pour créer une sustentation, au moins un stabilisateur horizontal (27), au moins un stabilisateur vertical (22), une pluralité de correcteurs d'assiette (26) et une pluralité de déflecteurs (23) se rattachant à l'aéronef, et les moyens de calcul de contrôle par ordinateur (24) sont programmés pour opérer un vol piloté par câble, contrôler le guide et les moyens de navigation, maintenir l'aéronef dans une configuration de vol précise sans contact avec l'élément allongé ;
dans lequel l'élément allongé comprend un câble structurel ayant une ouverture centrale, et une fente (56) en partie basse interconnectée sur toute la longueur de l'élément allongé, le au moins un guide comprend au moins une rangée linéaire de premiers électro-aimants (44) se logeant dans l'ouverture centrale, et les moyens pour déplacer le guide comprennent une série de seconds électro-aimants (54) entourant l'ouverture centrale sur toute sa longueur, et des moyens pour créer une phase alternante constamment se déplacent le long des seconds électro-aimants qui leur sont connectés électriquement, de telle sorte que la création de la phase alternante constamment se déplaçant le long des seconds électro-aimants attire les premiers électro-aimants et les tire sur la longueur du câble structurel, les premiers électro-aimants restant séparés des seconds électro-aimants de telle sorte qu'un moteur / générateur électromagnétique est créé par l'interaction des premiers et seconds électro-aimants.

2. Le système de transport de la revendication 1, dans lequel les moyens pour créer une sustentation comprennent des ailes delta rétractables inversement extensibles des deux côtés opposés de l'aéronef.

3. Le système de transport de la revendication 2, dans lequel les moyens pour créer une sustentation comprennent en outre un profil formant plan de sustentation de telle sorte que l'aéronef crée la sustentation.

4. Le système de transport de la revendication 3, dans lequel les moyens pour créer une sustentation comprennent en outre des moyens pour modifier l'angle d'attaque de l'aéronef pour créer la sustentation.

5. Le système de transport de la revendication 1, dans lequel le guide, au moins, comprend en outre un support allongé s'étendant de chacune des rangées linéaires des premiers électro-aimants par la fente d'interconnection du guide avec l'aéronef et le support allongé comprend encore au moins un câble pour conduire l'électricité du guide vers l'aéronef.

6. Le système de transport de la revendication 5 dans lequel le support allongé comprend un câble support réglable en longueur, de telle sorte que l'aéronef puisse être relevé ou abaissé à partir du câble structurel horizontal.

7. Le système de transport de la revendication 1, dans lequel les moyens pour conduite l'électricité comprennent un câble de distribution électrique attaché au câble structurel sur sa longueur, le câble de distribution électrique étant connecté à une grille de distribution électrique de telle sorte que l'accélération de l'aéronef apporte la puissance électrique à partir de la grille de distribution électrique et la décélération de l'aéronef produit un apport de puissance électrique sur la grille de distribution électrique, créant une utilisation hautement efficace de l'énergie.

8. Le système de transport de la revendication 7, qui comprend en outre un câble de fibre optique attaché au câble structurel sur sa longueur et des moyens de communication audiovisuelle numériques à longue distance ayant un émetteur et un récepteur d'ondes radio dans l'aéronef, de telle sorte que les moyens de communication à longue distance inter-agissent avec le câble de fibre optique par ondes radio, le câble de fibre optique étant connecté par satellites à un réseau global numérique de communication audiovisuelle.

9. Le système de transport de la revendication 8, dans lequel le câble de fibre optique et le câble de distribution électrique sont tous deux connectés à un bâtiment, l'aéronef est configuré pour s'insérer dans une pièce du bâtiment, les moyens de calcul par ordinateur pour contrôler le vol sont programmé pour pouvoir être utilisés pour d'autres usages à l'intérieur de la pièce dans le bâtiment, et les moyens de communication audiovisuelle numériques à longue distance sont configurés pour pouvoir être utilisés dans la pièce dans le bâtiment.

10. Le système de transport de la revendication 1, qui comprend en outre un super ordinateur central interconnecté électriquement avec les moyens pour créer une phase constamment alternante suivant les seconds électro-aimants, et interconnecté électriquement avec les moyens de calcul par ordinateur pour contrôler le vol, de telle sorte que le mouvement de plusieurs aéronefs suivant le câble structurel est contrôlé par le super ordinateur central et que les moyens de calcul par ordinateur pour contrôler le vol peuvent communiquer des informations d'acheminement entre l'aéronef et l'ordinateur central.

11. Le système de transport de la revendication 10, dans lequel l'aéronef est contrôlé par l'ordinateur central et transporte uniquement du fret.

12. Le système de transport de la revendication 11, dans lequel une pluralité d'aéronefs sont en mouvement constant sur une pluralité de câbles structurels, la pluralité d'aéronef portant des missiles, constituant ainsi un système de transport de missile mobile basé à terre, à réponse instantanée.

13. Le système de transport de la revendication 1, qui comprend en outre un moteur électrique auxiliaire connecté au guide, au moins, ayant des moyens mécaniques pour déplacer le guide le long du câble structurel, une batterie dans l'aéronef pour l'alimentation du moteur électrique, et des moyens pour recharger la batterie.

14. Le système de transport de la revendication 13, qui comprend en outre des câbles de branchement d'entrée et sortie connectés au câble structurel, les câbles de branchement étant plus résistants que le câble structurel pour supporter l'aéronef accroché aux câbles de branchement, les câbles de branchement s'inclinant pour placer l'aéronef au niveau du sol pour le charger ou le décharger de telle sorte que les moyens mécaniques pour déplacer le guide, au moins, entraînent les câbles de branchement pour déplacer l'aéronef le long des câbles de branchement en ralentissant jusqu'à un arrêt sur les câbles de branchement de sortie et en accélérant à partir de l'arrêt jusqu'à la vitesse de vol sur le câble de branchement d'entrée.

15. Le système de transport de la revendication 13, qui comprend en outre des panneaux solaires sur l'aéronef pour recharger les batteries.

16. Le système de transport de la revendication 1, qui comprend en outre un câble structurel additionnel séparé du câble structurel et parallèle à lui, de telle sorte qu'un aéronef de grand volume puisse être connecté aux deux câbles structurels par le guide, au moins, qui est connecté à chaque câble structurel, de telle sorte qu'un aéronef de grand volume soit capable de porter de lourdes charges, et l'aéronef de grand volume a des moyens pour son amarrage de telle sorte que l'aéronef se déplaçant le long d'un câble structurel simple puisse s'amarrer à l'aéronef de grand volume pour embarquer ou débarquer des passages pour des destinations choisies, tout en se déplaçant.

17. Le système de transport de la revendication 1, dans lequel les moyens pour supporter le câble structurel comprennent une série de poteaux verticaux fixés dans le sol ayant des moyens pour supporter le câble structurel suivant son sommet.

18. Le système de transport de la revendication 1, dans lequel le guide, au moins, comprend en outre une pluralité de rouleaux placés sur son pourtour de telle sorte que lesdits rouleaux viennent en contact avec le câble structurel si les électro-aimants venaient à ne plus tenir le guide à distance du câble structurel.
